# EUROPÄISCHE PATENTANMELDUNG

(11) **EP 2 767 741 A2**
(43) Veröffentlichungstag der Anmeldung: **20.08.2014**
(21) Anmeldenummer: 14150874.7
(22) Anmeldetag: 13.01.2014
(51) Int. Cl.: F16H 63/30, F16H 63/34

(54) **Schalteinrichtung für ein Fahrzeuggetriebe und Verfahren**

(30) Priorität: 13.02.2013 DE 102013202275
(71) Anmelder: ZF Friedrichshafen AG, 88038 Friedrichshafen (DE)
(72) Erfinder: Rother, Sylva, 88079 Kressbronn (DE)

(57) **Zusammenfassung**

Es wird eine Schalteinrichtung mit einer Schalt- und Wählwelle (1) für ein Fahrzeuggetriebe zum Wählen und Schalten von mehreren Gangstufen (R, G1, G2, G3, G4, G5, G6, G7) vorgeschlagen, wobei die Schalt- und Wählwelle (1) zumindest eine Sperreinrichtung zum Verhindern eines unbeabsichtigten Überspringens einer anzuwählenden Schaltgasse bei der Kulissenführung aufweist. Ferner wird ein Verfahren zum Betätigen einer Sperreinrichtung einer Schalteinrichtung mit einer Schaltund Wählwelle (1) für ein Fahrzeuggetriebe vorgeschlagen, wobei bei einer Wählbewegung der Schalt- und Wählwelle (1) ein erster Sperrbolzen (2) der Sperreinrichtung mitgedreht wird und ein zweiter Sperrbolzen (3) der Sperreinrichtung von dem ersten Sperrbolzen (2) mitgenommen und vorgespannt wird, bis die Drehbewegung des zweiten Sperrbolzens (3) an einem gehäuseseitigen Anschlag (8) bei Erreichen einer anzuwählenden Schaltgasse beendet wird.

## Beschreibung

Die vorliegende Erfindung betrifft eine Schalteinrichtung mit einer Schalt- und Wählwelle für ein Fahrzeuggetriebe gemäß der im Oberbegriff des Patentanspruchs 1 näher definierten Art. Ferner betrifft die vorliegende Erfindung ein Verfahren zum Betätigen einer Sperreinrichtung einer Schalteinrichtung für ein Fahrzeuggetriebe.

Schalteinrichtungen für Handschaltgetriebe weisen eine Schalt- und Wählwel-le auf, die über eine Kulissenführung mit einem entsprechenden Schaltbild mit zumindest einer Wählgasse und mehreren Schaltgassen betätigt wird. Die korrekte Wahl der Schaltgassen kann durch entsprechende Rastierungen unterstützt werden. Beispielsweise ist eine Rastierung für die Neutralposition vorgesehen, so dass der Wähl- bzw. Schalthebel in der unbetätigten Position automatisch in der Wählgasse im Bereich der dritten Schaltgasse angeordnet ist, welcher die dritte und vierte Gangstufe zugeordnet sind.

Beispielsweise aus der Druckschrift DE 10 2010 029 864 A1 ist eine Anordnung mit einer Kulissenführung bzw. einem Mitnehmerelement einer Schalteinrichtung bekannt, bei der die Bewegungen eines Wählhebels und eines Schalthebels über das Mitnehmerelement auf die Schalt- und Wählwelle zum Betätigen von Schaltelementen übertragen wird. Bei der bekannten Anordnung ist das Mitnehmerelement als Multifunktionsbauteil mit zumindest einer Funktionsfläche zum Ausführen zusätzlicher Funktionen bei einem Wähl- und Schaltvorgang ausgeführt.

Bei einem manuell-geschalteten 7-Ganggetriebe sind mit der Rückwärtsgangstufe insgesamt acht Gangstufen vorgesehen, wobei z. B. insgesamt fünf Schaltgassen über eine Wählgasse verbunden sind. Beispielsweise kann der ersten Schaltgasse nur die Rückwärtsgangstufe zugeordnet sein, wobei der zweiten Schaltgasse die erste Gangstufe und die zweite Gangstufe, der dritten Schaltgasse die dritte und vierte Gangstufe, der vierten Schaltgasse die fünfte und sechste Gangstufe und der fünften Schaltgasse ausschließlich die siebente Gangstufe zugeordnet sein können. Bei einer derartigen Kulissenführung mit dem vorbeschriebenen Schaltbild ergibt sich das Problem, dass beispielsweise ausgehend von der Neutralposition im Bereich der dritten Schaltgasse versehentlich anstelle der fünften oder sechsten Gangstufe die siebente Gangstufe gewählt und geschaltet wird. Eine zusätzliche Rastierung zur Erhöhung der Wählkräfte bei der Schaltgassenwahl ist aus Schaltkomfort- und Sicherheitsgründen oft nicht erwünscht.

Demzufolge liegt der vorliegenden Erfindung die Aufgabe zu Grunde, eine Schalteinrichtung der eingangs beschriebenen Gattung sowie ein zugehöriges Verfahren vorzuschlagen, wobei Fehlschaltungen ohne Schaltkomfort- und Sicherheitseinbußen verhindert werden.

Diese Aufgabe wird erfindungsgemäß durch die Merkmale der Patentansprüche 1 und 7 gelöst. Vorteilhafte Ausgestaltungen ergeben sich insbesondere aus den Unteransprüchen, der Beschreibung und den Zeichnungen.

Somit wird eine Schalteinrichtung für ein Fahrzeuggetriebe, insbesondere ein Handschaltgetriebe, mit einer Schalt- und Wählwelle zum Wählen und Schalten von mehreren Gangstufen, insbesondere mindestens 8 Gangstufen, vorgeschlagen. Erfindungsgemäß ist vorgesehen, dass der Schalt- und Wählwelle zumindest eine Sperreinrichtung zur Verhinderung eines unbeabsichtigten Überspringens einer Schaltgasse zugeordnet ist bzw. die Schalteinrichtung mindestens eine Sperreinrichtung aufweist. Die Sperreinrichtung umfasst beispielsweise ein der Schalt- und Wählwelle zugeordnetes Sperrelement und ein weiteres gehäuseseitig angeordnetes Sperrelement, die zum Blockieren der Wählbewegung bei Erreichen einer anzuwählenden Schaltgasse entsprechend in Wirkverbindung gebracht werden.

Mit der vorgesehenen Sperreinrichtung kann ein Fehlschalten einer Schaltgasse sicher verhindert werden. In vorteilhafter Weise ist die Sperreinrichtung an der Schalt- und Wählwelle direkt vorgesehen. Bei der erfindungsgemäßen Schalteinrichtung können Rückschaltungen ohne Vorbedingungen durchgeführt werden.

Gemäß einer möglichen Ausführungsvariante der vorliegenden Erfindung kann vorgesehen sein, dass das gehäuseseitige Sperrelement federbelastet und in seiner Drehbewegung begrenzt ist. Die federbelastete Drehbewegung bei dem gehäuseseitigen Sperrelement kann beispielsweise durch eine Drehfeder oder auch durch einen Arretierbolzen mit federbelasteter Wirkverbindung realisiert werden.

Die der Erfindung zu Grunde liegende Aufgabe wird auch durch ein Verfahren zum Betätigen einer Sperreinrichtung einer Schalteinrichtung mit einer Schalt- und Wählwelle für ein Fahrzeuggetriebe gelöst, wobei bei einer Wählbewegung der Schalt- und Wählwelle ein erster Sperrbolzen der Sperreinrichtung mitgedreht wird und ein zweiter Sperrbolzen der Sperreinrichtung von dem ersten Sperrbolzen mitgenommen wird und vorgespannt wird, bis die Drehbewegung des zweiten Sperrbolzens an einem gehäuseseitigen Anschlag bei Erreichen einer anzuwählenden Schaltgasse beendet wird.

Durch das Blockieren des zweiten Sperrbolzens der Sperreinrichtung wird die Wählbewegung der Schalt- und Wählwelle entsprechend blockiert, um ein Überspringen der anzuwählenden Schaltgasse zu verhindern. Erst nach dem Schalten einer der der Schaltgasse zugeordneten Gangstufen wird die Blockade gelöst, indem der zweite Sperrbolzen aufgrund der Axialbewegung der Schalt- und Wählwelle durch den ersten Sperrbolzen wieder freigegeben wird, sodass der zweite Sperrbolzen selbsttätig in seine Ausgangsposition zurückgedreht wird. Danach kann eine andere Schaltgasse angewählt werden.

Vorzugsweise wird die vorgeschlagene Schalteinrichtung und auch das vorgeschlagene Verfahren zum Betätigen einer Sperreinrichtung bei einem 8- Gang-Stufengetriebe mit sieben Vorwärtsgangstufen und einer Rückwärtsgangstufe eingesetzt, bei der fünf Schaltgassen vorgesehen sind, wobei der ersten Schaltgasse die Rückwärtsgangstufe und der fünften Schaltgasse die siebente Vorwärtsgangstufe zugeordnet sind. Es sind auch andere Anwendungsmöglichkeiten denkbar.

Nachfolgend wird die vorliegende Erfindung anhand der Zeichnungen weiter erläutert. Es zeigen:
Fig. 1 eine schematische Teilansicht einer möglichen Ausführungsvariante einer erfindungsgemäßen Schalteinrichtung mit einer Sperreinrichtung an der Schaltund Wählwelle;
Fig. 2 eine geschnittene Ansicht entlang der Schnittlinie A-A gemäß Fig. 1;
Fig. 3 eine schematische Teilansicht der Schalteinrichtung, bei der die Schaltund Wählwelle in der Neutralposition im Bereich der Schaltgasse der dritten und vierten Vorwärtsgangstufe angeordnet ist;
Fig. 4 eine Draufsicht auf die Schalt- und Wählwelle und die Sperreinrichtung gemäß Fig. 3;
Fig. 5 eine schematische Teilansicht der Schalteinrichtung mit der Schalt- und Wählwelle in der Schaltgasse der fünften und sechsten Vorwärtsgangstufe;
Fig. 6 eine Draufsicht auf die Schalt- und Wählwelle und die Sperreinrichtung gemäß Fig. 5;
Fig. 7 eine schematische Teilansicht der Schalteinrichtung mit der Schalt- und Wählwelle bei geschalteter fünfter oder sechster Vorwärtsgangstufe;
Fig. 8 eine Draufsicht auf die Schalt- und Wählwelle und die Sperreinrichtung gemäß Fig. 7;
Fig. 9 eine schematische Teilansicht der Schalteinrichtung mit der Schalt- und Wählwelle in der Schaltgasse der fünften und sechsten Vorwärtsgangstufe nach einer Zurückschaltung;
Fig. 10 eine Draufsicht auf die Schalt- und Wählwelle und die Sperreinrichtung gemäß Fig. 9;
Fig. 11 eine schematische Teilansicht der Schalteinrichtung mit der Schalt- und Wählwelle in der Schaltgasse der siebenten Vorwärtsgangstufe;
Fig. 12 eine Draufsicht auf die Schalt- und Wählwelle und die Sperreinrichtung gemäß Fig. 11;
Fig. 13 eine schematische Teilansicht der Schalteinrichtung mit der Schalt- und Wählwelle beim Wählen aus den Schaltgassen der fünften, sechsten oder siebten Vorwärtsgangstufe in die Neutralposition in einer ersten Zwischenstellung;
Fig. 14 eine Draufsicht auf die Schalt- und Wählwelle und die Sperreinrichtung gemäß Fig. 13;
Fig. 15 eine schematische Teilansicht der Schalteinrichtung mit der Schalt- und Wählwelle beim Wählen aus der Schaltgasse der fünften und sechsten Vorwärtsgangstufe in die Neutralposition in einer zweiten Zwischenstellung;
Fig. 16 eine Draufsicht auf die Schalt- und Wählwelle und die Sperreinrichtung gemäß Fig. 15;
Fig. 17 eine schematische Teilansicht der Schalteinrichtung mit der Schalt- und Wählwelle in der Neutralposition;
Fig. 18 eine Draufsicht auf die Schalt- und Wählwelle und die Sperreinrichtung gemäß Fig. 17;
Fig. 19 eine schematische Teilansicht einer zweiten Ausführungsvariante der Schalteinrichtung; und
Fig. 20 eine schematische Ansicht eines beispielhaften Schaltbildes der Schalteinrichtung.

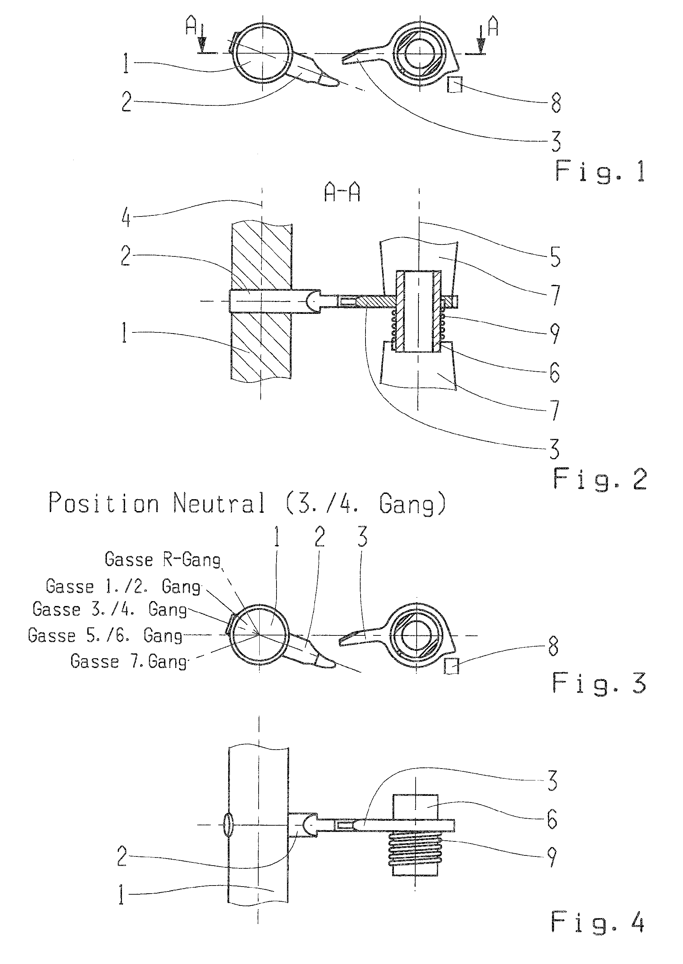

In Fig. 1 und 2 sowie Fig. 19 sind mögliche Ausführungsvarianten einer erfindungsgemäßen Schalteinrichtung beispielhaft dargestellt.

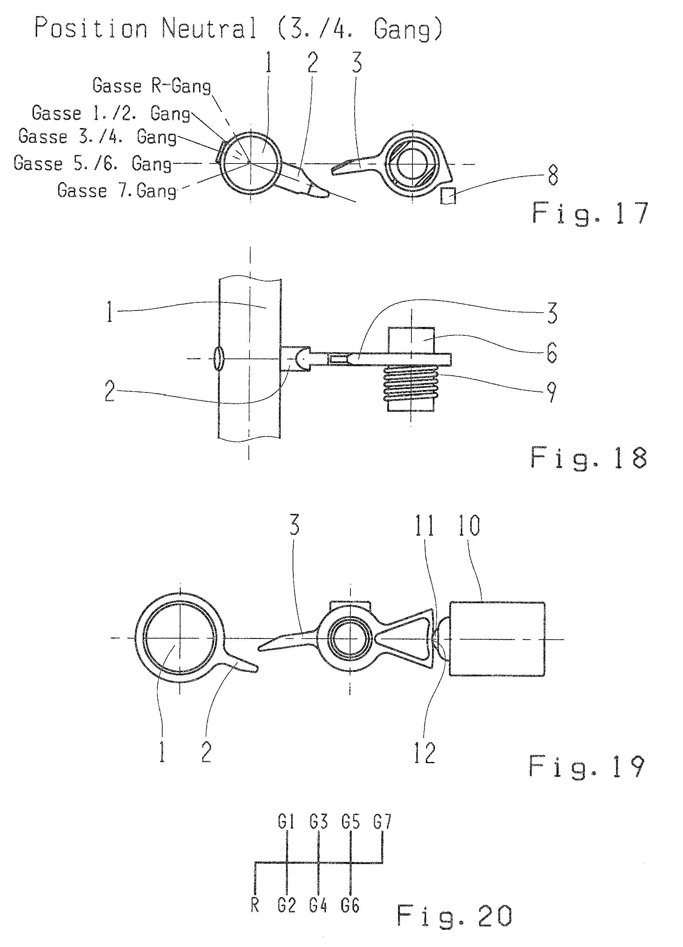

Unabhängig von den jeweiligen Ausführungsvarianten ist eine Schalt- und Wählwelle 1 für ein Fahrzeuggetriebe vorgesehen, welche zum Wählen und Schalten von zum Beispiel acht Gängen bzw. Gangstufen R, G1, G2, G3, G4, G5, G6, G7 betätigbar ist. Ein beispielhaftes Schaltbild der Schalteinrichtung ist in Fig. 20 angedeutet. Daraus ist ersichtlich, dass der ersten Schaltgasse die Rückwärtsgangstufe R, der zweiten Schaltgasse die erste und zweite Vorwärtsgangstufe G1, G2, der dritten Schaltgasse die dritte und vierte Vorwärtsgangstufe G3, G4, der vierten Schaltgasse die fünfte und sechste Vorwärtsgangstufe G5 und G 6, sowie der fünften Schaltgasse die siebente Vorwärtsgangstufe G7 zugeordnet ist. Die über eine Rastierung festgelegte Neutralposition befindet sich in der Schaltgasse der dritten Vorwärtsgangstufe G3 und der vierten Vorwärtsgangstufe G4.

Erfindungsgemäß ist bei der vorgeschlagenen Schalteinrichtung der Schaltund Wählwelle 1 eine Sperreinrichtung zur Verhinderung eines unbeabsichtigten Überspringens einer anzuwählenden Schaltgasse angeordnet. Die Sperreinrichtung weist einen ersten drehfest an der Schalt- und Wählwelle 1 befestigten Sperrbolzen 2 auf, der mit einem gehäuseseitig begrenzt drehbar gelagerten und federbelasteten zweiten Sperrbolzen 3 der Sperreinrichtung zum Blockieren der Wählbewegung der Schalt- und Wählwelle 1 bei Erreichen der anzuwählenden Schaltgasse korrespondiert.

Wie aus den Fig. 1 bis 19 hervorgeht, sind die Drehachse 4 der Schalt- und Wählwelle 1 mit dem ersten Sperrbolzen 2 und die Drehachse 5 des zweiten Sperrbolzens 3 in etwa achsparallel zueinander ausgerichtet, wobei der Abstand zwischen den beiden Drehachsen 4, 5 derart gewählt ist, dass die beiden Sperrbolzen 2, 3 bezogen auf eine axiale Ebene der Schalt- und Wählwelle 1 bei Erreichen der anzuwählenden Schaltgasse miteinander in Wirkverbindung bringbar sind. Der zweite Sperrbolzen 3 ist über eine Zentrierhülse 6 drehbar an dem Gehäuse 7 gelagert, wobei die Drehbewegung des zweiten Sperrbolzens 3 mit einer Nase oder dergleichen über einen Gehäuseanschlag 8 begrenzt ist.

Bei der ersten Ausführungsvariante gemäß Fig. 1 bis 18 ist zur Rückstellung des zweiten Sperrbolzens 3 eine koaxial zur Zentrierhülse 6 angeordnete Drehfeder 9 vorgesehen.

Bei der zweiten Ausführungsvariante gemäß Fig. 19 wird die Rückstellung des zweiten Sperrbolzens 3 über eine federbelastete Arretierbuchse 10 vorgesehen, die mit dem zweiten Sperrbolzen 3 über eine federbelastete Formschlussverbindung in Kontakt steht. Die federbelastete Formschlussverbindung wird durch eine unter Federspannung in der Arretierbuchse 10 angeordnete Kugel 11 realisiert, die mit einer an die Kugeloberfläche angeformten Ausnehmung 12 in Wirkverbindung steht, so dass Drehbewegungen des zweiten Sperrbolzens 3 bis zu einer Maximalverdrehung entgegen der Federkraft zugelassen werden und eine Rückstellung in die Ausgangsposition sichergestellt ist.

Anhand der Fig. 3 bis 18 ist ein möglicher Ablauf nach dem vorgeschlagenen Verfahren zum Betätigen einer Sperreinrichtung einer Schalteinrichtung mit einer Schalt- und Wählwelle 1 für ein Fahrzeuggetriebe beispielhaft dargestellt.

Im Rahmen des Verfahrens wird bei einer Wählbewegung der Schalt- und Wählwelle 1 ein erster Sperrbolzen 2 der Sperreinrichtung mitgedreht und ein zweiter Sperrbolzen 3 der Sperreinrichtung von dem ersten Sperrbolzen 2 mitgenommen und entsprechend vorgespannt, bis die Drehbewegung des zweiten Sperrbolzens 3 an einem gehäuseseitigen Anschlag 8 bei Erreichen einer anzuwählenden Schaltgasse, zum Beispiel der Schaltgasse der fünften Vorwärtsgangstufe G5 und der sechsten Vorwärtsgangstufe G6, beendet wird. Nach blockierter Wählbewegung wird die Schalt- und Wählwelle 1 zum Schalten der der angewählten Schaltgasse zugeordneten Gangstufen in axialer Richtung entlang der Drehachse 4 bewegt, wobei die Sperrbolzen 2, 3 durch die Axialbewegung der Schalt- und Wählwelle 1 voneinander entfernt werden, so dass der federbelastete zweite Sperrbolzen 3 in seine Ausgangsposition zurück gedreht wird und somit die weitere Wählbewegung der Schalt-und Wählwelle 1 nicht weiter blockiert. Folglich kann die Schalt- und Wählwelle 1 zum Auslegen der Gangstufe in die Wählgasse axial zurückbewegt werden und zum Wählen der nächsten Schaltgasse zum Schalten der nächsthöheren Gangstufen aufgrund des freigegebenen ersten Sperrbolzens 2 weitergedreht werden, bis die gewünschte Wählgasse erreicht wird. Zum Auslegen der geschalteten Gangstufe wird die Schalt- und Wählwelle 1 axial zurückbewegt und danach zum Wählen einer beliebigen Schaltgasse gedreht.

Die in den Fig. 3 bis 18 dargestellten verschiedenen Positionen der Schalt-und Wählwelle 1 und der Sperreinrichtung zeigen den Verlauf anhand eines in Fig. 20 dargestellten Schaltbildes der Schalteinrichtung. Somit wird die Schalt- und Wählwelle 1 ausgehend von der Neutralposition, welche sich in der Wählgasse im Bereich der Schaltgasse der dritten Vorwärtsgangstufe G3 und der vierten Vorwärtsgangstufe G4 befindet, mit dem ersten Sperrbolzen 2 und dem mitdrehenden zweiten Sperrbolzen 3 gedreht, bis die Drehbewegung des zweiten Sperrbolzen 3 gehäuseseitig blockiert wird, wenn die Schaltgasse der fünften und sechsten Vorwärtsgangstufe G5, G6 erreicht wird. In der blockierten Position des zweiten Sperrbolzens 3 wird eine weitere Wählbewegung der Schalt- und Wählwelle 1 blockiert, bis eine Axialbewegung der Schalt- und Wählwelle 1 zum Schalten der fünften Vorwärtsgangstufe G5 oder der sechsten Vorwärtsgangstufe G6 durchgeführt wird. Durch die Axialbewegung der Schalt- und Wählwelle 1 wird der erste Sperrbolzen 2 von dem zweiten Sperrbolzen 3 entfernt, so dass der zweite Sperrbolzen 3 in seine Ausgangsposition selbsttätig aufgrund der anliegenden Federkraft zurückgedreht wird, so dass danach eine Wählbewegung der Schalt- und Wählwelle 1 zur Schaltgasse der siebenten Vorwärtsgangstufe G7 freigegeben wird. Ein Zurückschalten aus der siebenten Vorwärtsgangstufe G7 in sämtliche niedrigeren Gänge kann ohne Vorbedingungen realisiert werden.

In den Fig. 3 bis 17 sind jeweils verschiedene Drehwinkel der Schalt- und Wählwelle 1 über Strichlinien einer entsprechenden Wählposition entlang der Wählgasse zugeordnet.

In den Fig. 3 und 4 ist die Schalt- und Wählwelle 1 in der Neutralposition in der Schaltgasse der dritten und vierten Vorwärtsgangstufe G3, G4 dargestellt, wobei keine Gangstufe geschaltet ist, welches insbesondere aus der Darstellung in Fig. 4 hervorgeht. Die beiden Sperrbolzen 2, 3 stehen in dieser Position noch nicht in Wirkverbindung, wobei sich der zweite Sperrbolzen 3 in seiner Ausgangsposition befindet.

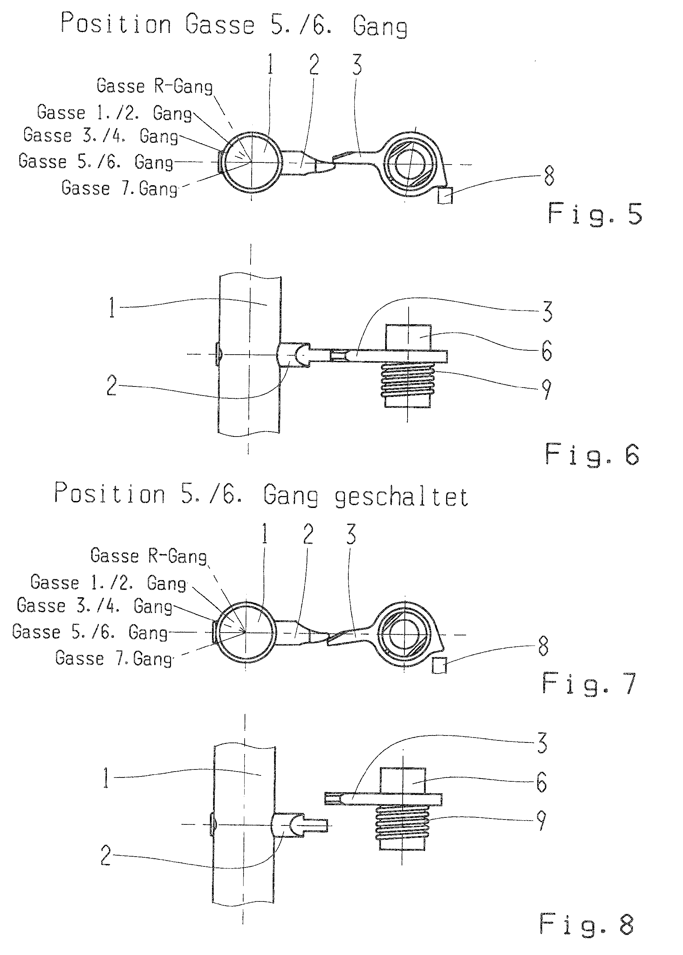

Um die Schaltgasse der fünften Vorwärtsgangstufe G5 und der sechsten Vorwärtsgangstufe G6 anzuwählen, wird die Schalt- und Wählwelle 1, und damit auch der erste Sperrbolzen 2, gedreht, so dass der erste Sperrbolzen 2, wie in Fig. 5 dargestellt, in Wirkverbindung mit dem zweiten Sperrbolzen 3 tritt und dieser von dem ersten Sperrbolzen 2 mitgenommen wird, so dass die Drehfeder 9 vorgespannt wird. Die Drehbewegung der Schalt- und Wählwelle 1 wird durch den Gehäuseanschlag 8 des zweiten Sperrbolzens 3 begrenzt. Der Gehäuseanschlag 8 ist so gewählt, dass bei Erreichen der Schaltgasse der fünften und sechsten Vorwärtsgangstufe G5, G6 der zweite Sperrbolzen 3 an dem Gehäuseanschlag 8 anschlägt, wie in Fig. 5 dargestellt. Ein Weiterwählen in die Schaltgasse der siebenten Vorwärtsgangstufe G7 ist somit nicht möglich. Es kann jetzt nur zurückgewählt werden oder in die fünfte Vorwärtsgangstufe G5 oder in die sechste Vorwärtsgangstufe G6 geschaltet werden, wie dies in den Fig. 7 und 8 dargestellt ist. Wenn in die fünfte oder die sechste Vorwärtsgangstufe G5, G6 geschaltet wird, führt die Schalt- und Wählwelle 1 eine Axialbewegung aus. Dadurch gibt der erste Sperrbolzen 2 den zweiten Sperrbolzen 3 frei. Durch die vorgespannte Drehfeder 9 wird der zweite Sperrbolzen 3 in die Ausgangsposition zurückgedreht, wie dies aus Fig. 7 und 8 deutlich wird.

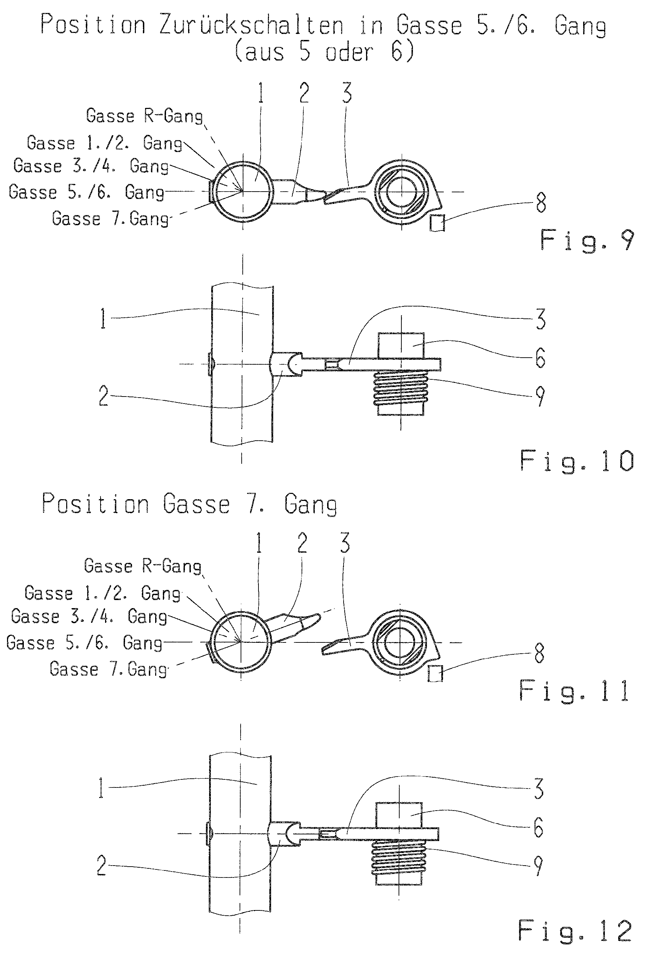

In den Fig. 9 und 10 ist das Zurückschalten bzw. das Auslegen der fünften oder sechsten Vorwärtsgangstufe G5, G6 in die Wählgasse dargestellt. Beim Zurückschalten in die Wählgasse befindet sich der erste Sperrbolzen 2 nun bezogen auf die Zeichnungsebene oberhalb des zweiten Sperrbolzens 3 und kann somit in die Schaltgasse der siebenten Vorwärtsgangstufe G7 mit der Schalt- und Wählwelle 1 gedreht werden, welches in den Fig. 11 und 12 dargestellt ist.

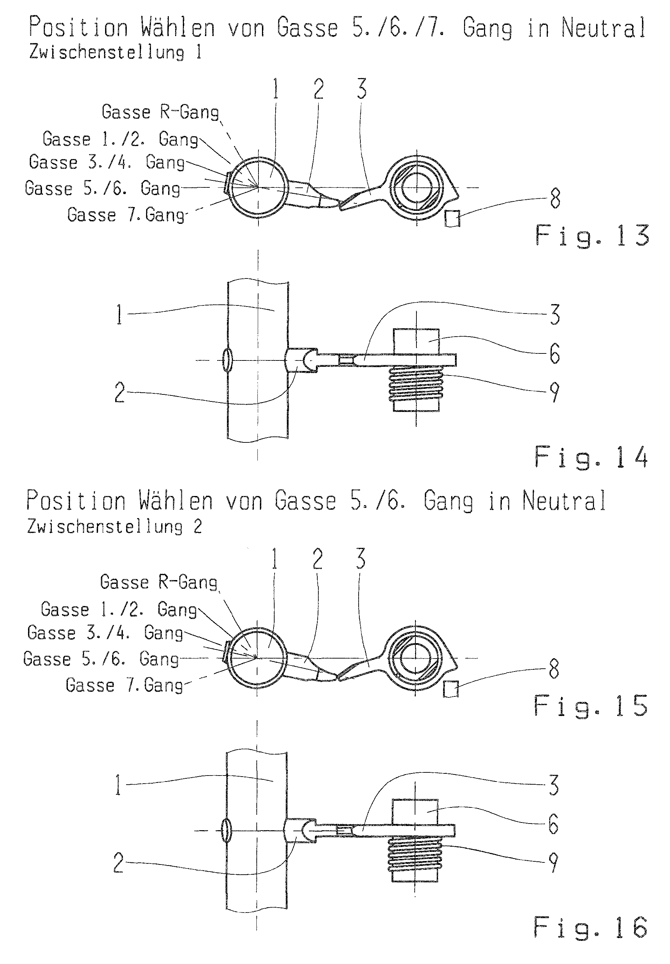

In den Fig. 13 bis 18 ist ein Zurückwählen aus der Schaltgasse des siebenten Vorwärtsganges G7 oder der Schaltgasse der fünften oder sechsten Vorwärtsgangstufe G5, G6 anhand von Zwischenstellungen dargestellt, wobei ein Zurückwählen jederzeit möglich ist. Im Bereich zwischen der Schaltgasse der fünften und sechsten Vorwärtsgangstufe G5, G6 und der Schaltgasse der dritten und vierten Vorwärtsgangstufe G3, G4 gibt es eine Überschneidung der beiden Sperrbolzen 2, 3. Da der zweite Sperrbolzen 3 aber frei drehbar gelagert ist, wird dieser durch den ersten Sperrbolzen 2 ausgelenkt und mittels der Drehfeder wieder in seine Ausgangsposition zurückgestellt, welches schließlich in Fig. 17 dargestellt ist.

Mit der vorgeschlagenen Schalteinrichtung und dem vorgeschlagenen Verfahren ist eine sichere Anwahl zum Beispiel der Schaltgasse der fünften und sechsten Vorwärtsgangstufe G5, G6 möglich. Ebenso wird ein unbeabsichtigtes Schalten in die Schaltgasse der siebenten Vorwärtsgangstufe G7 verhindert. Zum Zurückschalten aus der Schaltgasse der siebenten Vorwärtsgangstufe G7 in sämtliche andere Schaltgassen sind keine Vorbedingungen zu erfüllen.

### Bezugszeichen

- 1: Schalt- und Wählwelle
- 2: erster Sperrbolzen
- 3: zweiter Sperrbolzen
- 4: Drehachse der Schalt- und Wählwelle bzw. des ersten Sperrbolzens
- 5: Drehachse des zweiten Sperrbolzens
- 6: Zentrierhülse
- 7: Gehäuse
- 8: Gehäuseanschlag
- 9: Drehfeder
- 10: Arretierbuchse
- 11: Kugel
- 12: Ausnehmung
- R: Rückwärtsgangstufe
- G1: erste Vorwärtsgangstufe
- G2: zweite Vorwärtsgangstufe
- G3: dritte Vorwärtsgangstufe
- G4: vierte Vorwärtsgangstufe
- G5: fünfte Vorwärtsgangstufe
- G6: sechste Vorwärtsgangstufe
- G7: siebente Vorwärtsgangstufe

## Patentansprüche

1. Schalteinrichtung mit einer Schalt- und Wählwelle (1) für ein Fahrzeuggetriebe zum Wählen und Schalten von mehreren Gangstufen (R, G1, G2, G3, G4, G5, G6, G7), **dadurch gekennzeichnet, dass** die Schalt- und Wählwelle (1) zumindest eine Sperreinrichtung zur Verhinderung eines unbeabsichtigten Überspringens einer anzuwählenden Schaltgasse aufweist, wobei die Sperreinrichtung ein der Schalt- und Wählwelle (1) zugeordnetes Sperrelement (2) und ein weiteres, gehäuseseitig angeordnetes Sperrelement (3) umfasst, die zum Blockieren einer Wählbewegung bei Erreichen einer anzuwählenden Schaltgasse in Wirkverbindung sind.

2. Schalteinrichtung nach Anspruch 1, **dadurch gekennzeichnet, dass** die Sperreinrichtung einen ersten drehfest an der Schalt- und Wählwelle (1) befestigten Sperrbolzen (2) aufweist, der mit einem gehäuseseitig begrenzt drehbar gelagerten und federbelasteten zweiten Sperrbolzen (3) der Sperreinrichtung zum Blockieren der Wählbewegung der Schalt- und Wählwelle (1) bei Erreichen der anzuwählenden Schaltgasse korrespondiert.

3. Schalteinrichtung nach Anspruch 2, **dadurch gekennzeichnet, dass** eine Drehachse (4) der Schalt- und Wählwelle (1) mit dem ersten Sperrbolzen (2) und eine Drehachse (5) des zweiten Sperrbolzens (3) in etwa achsparallel zueinander ausgerichtet sind, wobei der Abstand zwischen den beiden Drehachsen (4, 5) derart gewählt ist, dass die beiden Sperrbolzen (2, 3) bezogen auf eine axiale Ebene der Schalt- und Wählwelle (1) bei Erreichen der anzuwählenden Schaltgasse miteinander in Wirkverbindung bringbar sind.

4. Schalteinrichtung nach einem der Ansprüche 2 oder 3, **dadurch gekennzeichnet, dass** der zweite Sperrbolzen (3) über eine Zentrierhülse (6) drehbar an einem Gehäuse (7) gelagert ist, wobei die Drehbewegung des zweiten Sperrbolzens (3) über einen Gehäuseanschlag (8) begrenzt ist.

5. Schalteinrichtung nach Anspruch 4, **dadurch gekennzeichnet, dass** eine Rückstellung des zweiten Sperrbolzens (3) durch eine koaxial zur Zentrierhülse (6) angeordnete Drehfeder (9) vorgesehen ist.

6. Schalteinrichtung nach einem der Ansprüche 2 bis 4, **dadurch gekennzeichnet, dass** eine Rückstellung des zweiten Sperrbolzens (3) über eine federbelastete Arretierbuchse (10) vorgesehen ist.

7. Verfahren zum Betätigen einer Sperreinrichtung einer Schalteinrichtung mit einer Schalt- und Wählwelle (1) für ein Fahrzeuggetriebe, **dadurch gekennzeichnet, dass** bei einer Wählbewegung der Schalt- und Wählwelle (1) ein erster Sperrbolzen (2) der Sperreinrichtung mitgedreht wird und ein zweiter Sperrbolzen (3) der Sperreinrichtung von dem ersten Sperrbolzen (2) mitgenommen und vorgespannt wird, bis die Drehbewegung des zweiten Sperrbolzens (3) an einem gehäuseseitigen Anschlag (8) bei Erreichen einer anzuwählenden Schaltgasse beendet wird.

8. Verfahren nach Anspruch 7, **dadurch gekennzeichnet, dass** die Schalt- und Wählwelle (1) nach blockierter Wählbewegung zum Schalten der der anzuwählenden Schaltgasse zugeordneten Gangstufen in axialer Richtung bewegt wird und dass die Sperrbolzen (2, 3) durch die Axialbewegung der Schalt- und Wählwelle (1) voneinander entfernt werden, sodass der vorgespannte zweite Sperrbolzen (3) in seine Ausgangsposition zurückgedreht wird.

9. Verfahren nach Anspruch 8, **dadurch gekennzeichnet, dass** die Schalt- und Wählwelle (1) zum Auslegen der Gangstufe in die Wählgasse axial zurückbewegt wird und dass die Schalt- und Wählwelle (1) zum Wählen der nächsten Schaltgasse aufgrund des freigebenden ersten Sperrbolzens (2) weitergedreht wird.

10. Verfahren nach Anspruch 9, **dadurch gekennzeichnet, dass** die Schalt-und Wählwelle (1) zum Auslegen der Gangstufe in die Wählgasse axial zurückbewegt wird und danach zum Wählen einer beliebigen Schaltgasse zurückgedreht wird.

11. Verfahren nach einem der vorangehenden Ansprüche, **dadurch gekennzeichnet, dass** die Schalt- und Wählwelle (1) ausgehend von der Neutralposition im Bereich der Schaltgasse einer dritten und vierten Vorwärtsgangstufe (G3, G4) mit dem ersten Sperrbolzen (2) und dem mitdrehenden zweiten Sperrbolzen (3) gedreht wird, bis die Drehbewegung des zweiten Sperrbolzens (3) gehäuseseitig blockiert wird, wenn die Schaltgasse einer fünften und sechsten Vorwärtsgangstufe (G5, G6) erreicht wird.

12. Verfahren nach Anspruch 11, **dadurch gekennzeichnet, dass** in der blockierten Position des zweiten Sperrbolzens (3) eine weitere Wählbewegung der Schalt- und Wählwelle (1) blockiert wird, bis eine Axialbewegung der Schalt- und Wählwelle (1) zum Schalten der fünften Vorwärtsgangstufe (G5) oder der sechsten Vorwärtsgangstufe (G6) durchgeführt wird.

13. Verfahren nach Anspruch 12, **dadurch gekennzeichnet, dass** durch die axiale Bewegung der Schalt- und Wählwelle (1) der erste Sperrbolzen (2) von dem zweiten Sperrbolzen (3) entfernt wird, so dass der zweite Sperrbolzen (3) in die Position der Schaltgasse der dritten und vierten Vorwärtsgangstufe (G3, G4) selbsttätig zurückgedreht wird, so dass danach eine Wählbewegung der Schalt- und Wählwelle (1) zur Schaltgasse einer siebenten Vorwärtsgangstufe freigegeben wird.
